# EUROPÄISCHE PATENTSCHRIFT

(11) **EP 1 995 492 B1**
(45) Veröffentlichungstag und Bekanntmachung des Hinweises auf die Patenterteilung: **10.03.2010**
(21) Anmeldenummer: 07010460.9
(22) Anmeldetag: 25.05.2007
(51) Int. Cl.: F16F 15/02, G01V 1/18, G05D 19/02

(54) **Verfahren und Vorrichtung zur Frequenzgangkorrektur in Schwingungsisolationssystemen**
Method and device for controlling frequency response in vibration insulation systems
Procédé et dispositif destinés à la correction de la courbe de fréquence dans des systèmes d'isolation de vibrations

(43) Veröffentlichungstag der Anmeldung: 26.11.2008
(73) Patentinhaber: Integrated Dynamics Engineering GmbH, 65479 Raunheim (DE)
(72) Erfinder: Heiland, Peter, 65479 Raunheim (DE)
(74) Vertreter: Kampfenkel, Klaus

(56) Entgegenhaltungen:
- DE-A1- 10 356 561
- JP-A- 8 200 435
- US-A- 4 796 873
- NELSON P G: "AN ACTIVE VIBRATION ISOLATION SYSTEM FOR INERTIAL REFERENCE AND PRECISION MEASUREMENT" REVIEW OF SCIENTIFIC INSTRUMENTS, AIP, MELVILLE, NY, US, Bd. 62, Nr. 9, 1. September 1991 (1991-09-01), Seiten 2069-2075, XP000262841 ISSN: 0034-6748

## Beschreibung

Die Erfindung betrifft allgemein das Steuern und Regeln eines Schwingungsisolationssystems mit Schwingungssignalgebern zur Lieferung analoger Sensorsignale und Aktoren zur Schwingungsunterdrückung durch Verarbeitung der Sensorsignale in Aktor-Stellsignale zur Ansteuerung der Aktoren, und insbesondere ein Verfahren und eine Vorrichtung zur Frequenzgangkorrektur der von Schwingungssignalgebern gelieferten Sensorsignale.

Aus EP 0 927 380 B1 ist ein Verfahren und eine Vorrichtung bekannt, um innerhalb eines Schwingungsisolationssystems auftretende bzw. zu unterdrückende Schwingungen auf einen Niederfrequenzbereich zu beschränken.

In der Schwingungsisolation werden als Aufnehmer für Schwingungen ferner unter anderem Geschwindigkeitsaufnehmer nach dem Tauchspulenprinzip, auch als Geophone bezeichnet, eingesetzt. Sie bieten bei geringen Hardwarekosten eine große Bandbreite und Empfindlichkeit für Schwingungen. Die Empfindlichkeit dieser Sensoren ist ab einer unteren Grenzfrequenz recht linear, fällt aber zu niedrigen Frequenzen ab einer Grenzfrequenz deutlich ab. Für typische Geophone, die in Schwingungsisolationssystemen zum Einsatz kommen, liegt diese Grenzfrequenz bei ca. 4 Hz. Da die Regelbandbreite aber typischerweise bis mindestens 0,1 Hz betragen sollte, ist es notwendig, die Empfindlichkeitskurve des Geophons unter 4 Hz anzuheben.

Bekannt sind für diesen Zweck ausgebildete analoge Schaltungen, die eine Frequenzgangkorrektur zwischen ca. 0,5 und 4 Hz erreichen können. Bei kleinen Frequenzen ist eine sehr hohe Verstärkung notwendig, um die Linearität zu erreichen. Bei analoger Implementierung erzeugt dies ein sehr hohes Rauschen im Sensorsignal. Darüber hinaus sind analoge elektrische Komponenten für eine Frequenzgangkorrektur kostenintensiv und weisen große Abmessungen auf. Durch die großen Abmessungen werden zum Beispiel die Möglichkeiten eingeschränkt, die Komponenten für die Frequenzgangkorrektur nahe am Sensor zu platzieren, da üblicherweise nahe am Dämpfer wenig Platz zur Verfügung steht.

Das Dokument JP 08 200435 A beschreibt ein Verfahren zur Regelung eines Schwingungsisolationssystems mit den folgenden Schritten und eine entsprechende Korrekturvorrichtung:
- Erzeugen wenigstens eines analogen, Schwingungen repräsentierenden Sensorsignals mittels wenigstens eines Schwingungssignalgebers,
- frequenzabhängiges Verstärken des Sensorsignals zum Korrigieren einer frequenzabhängigen Empfindlichkeit des Schwingungssignalgebers, umfassend eine erste Verstärkung mittels einer analogen Verstärkungsstufe,
- Erzeugen wenigstens eines Aktor-Stellsignals durch Verarbeiten des verstärkten Sensorsignals, und
- Ansteuern wenigstens eines Aktors mit dem Aktor-Stellsignal zum Entgegenwirken der Schwingungen.

Eine Aufgabe der Erfindung besteht somit darin, einen Weg zur Erzielung einer verbesserten Frequenzgangkorrektur eines Schwingungssignalgebers in einem Schwingurgsisolationssystem aufzuzeigen.

Diese Aufgabe wird durch ein Verfahren gemäß Anspruch 1, sowie eine Korrekturvorrichtung nach Anspruch 7 gelöst. Vorteilhafte Ausführungsformen und Weiterbildungen sind in den jeweiligen Unteransprüchen umschrieben.

Dementsprechend umfasst ein erfindungsgemäßes Verfahren zur Regelung eines Schwingungsisolationssystems das Erzeugen eines analogen, Schwingungen repräsentierenden Sensorsignals mittels wenigstens eines Schwingungssignalgebers, das frequenzabhängiges Verstärken des Sensorsignals zum Korrigieren einer frequenzabhängigen Empfindlichkeit des Schwingungssignalgebers, das Erzeugen wenigstens eines Aktor-Stellsignals durch Verarbeiten des verstärkten Sensorsignals, und das Ansteuern wenigstens eines Aktors mit dem Aktor-Stellsignal zum Entgegenwirken der Schwingungen, wobei das Verstärken des Sensorsignals eine erste Verstärkung mittels einer analogen Verstärkungsstufe und eine zweite Verstärkung mittels einer digitalen Verstärkungsstufe umfasst, wobei die analoge und die digitale Verstärkungsstufe hintereinander geschaltet sind. Zweckmäßigerweise wird das Signal vor der digitalen Verstärkungsstufe mittels eines A/D-Wandlers digitalisiert. Dementsprechend ist die digitale Verstärkungsstufe der analogen Verstärkungsstufe vorzugsweise nachgeschaltet.

Die Erfindung stellt somit eine hybride Frequenzgangkorrektur zum Einsatz in Schwingungsisolationssystemen bereit, die aus einem analogen Teil und einem digitalen Teil besteht. Die Frequenzgangkorrektur dient dazu, die Empfindlichkeit des Schwingungssignalgebers bei niedrigen Frequenzen anzuheben, um dadurch insbesondere eine im Wesentlichen lineare Empfindlichkeit des Schwingungssignalgebers über einen vorgegebenen Frequenzbereich zu erzielen, wobei der vorgegebene Frequenzbereich vorzugsweise eine untere Grenze von 0,1 Hz oder darunter aufweist.

Da die Empfindlichkeit eines Schwingungssignalgebers oberhalb einer Grenzfrequenz typischerweise beraits eine ausreichend lineare Empfindlichkeit aufweist, sieht das Verfahren vorteilhaft vor, das Sensorsignal im Wesentlichen nur unterhalb dieser Grenzfrequenz zu verstärken, wobei die Grenzfrequenz vorzugsweise bei etwa 4 Hz liegt.

Besonders vorteilhaft ist das Verfahren anwendbar, wenn das Regelungssystem der Schwingungsiosolation rein digital ausgeführt ist - was für die weitaus meisten der Fall ist. Für diesen Fall erfolgt die digitale Verstärkung vorzugsweise innerhalb des Regelungssystems, direkt nach der Digitalisierung des Sensorsignals.

Es lassen sich zwei grundsätzliche Ausführungsformen des Verfahrens unterscheiden. In einer ersten Ausführungsform arbeiten die Komponenten zur analogen und zur digitalen Frequenzgangkorrektur auf dem gesamten Frequenzbereich gleichzeitig, wobei jeder Teil die Hälfte der notwendigen Korrektur aufbringt. Dementsprechend erfolgt die erste und zweite Verstärkung mit einer im Wesentlichen gleichen Frequenzabhängigkeit.

In einer zweiten Ausführungsform teilen sich die analoge und die digitale Frequenzgangkorrektur den Frequenzbereich auf, wobei die Komponenten zur digitalen Korrektur die tieferen Frequenzen, diejenigen zur analogen Korrektur die höheren Frequenzen korrigiert. Dementsprechend wird das Sensorsignal vorteilhaft durch die erste, analoge Verstärkung in einem ersten Frequenzbereich und durch die zweite, digitale Verstärkung in einem zweiten, vom ersten unterschiedlichen Frequenzbereich verstärkt, wobei vorzugsweise die analoge Verstärkung bei höheren Frequenzen erfolgt als die digitale Verstärkung.

Dadurch wird gewährleistet, dass in der ersten Ausführungsform für die analoge Frequenzgangkorrektur nur noch die Hälfte der Verstärkung gegenüber einer vollständig analogen Frequenzgangkorrektur benötigt wird bzw. in der zweiten Ausführungsform die Komponenten zur analogen Frequenzgangkorrektur nur deutlich höherfrequent abgestimmt zu sein brauchen. Beide Ausführungsformen reduzieren den Rauscheintrag durch elektrische Komponenten, sowie die Größe der Bauform. Die Vorteile einer zumindest teilweisen analogen Frequenzgangkorrektur, wie beispielsweise eine höhere Genauigkeit, werden hingegen erhalten.

Selbstverständlich können die Frequenzbereiche, in denen die analoge Frequenzgangkorrektur bzw. die digitale Frequenzgangkorrektur durchgeführt wird, auch überlappen. Insbesondere kann zur Erzielung einer Frequenzgangkorrektur über einen vorgegebenen Gesamtfrequenzbereich eine an die analoge Verstärkung angepasste digitale Verstärkung erfolgen.

Eine erfindungsgemäße Korrekturvorrichtung zum Korrigieren einer frequenzabhängigen Empfindlichkeit eines Schwingungssignalgebers eines Schwingungsisolationssystems umfasst eine analoge Verstärkungsstufe, ausgebildet zur frequenzabhängigen Verstärkung eines von dem Schwingungssignalgeber erzeugten Sensorsignals in einem ersten Frequenzbereich und eine digitale Verstärkungsstufe, ausgebildet zur frequenzabhängigen Verstärkung des digitalisierten Signals in einem zweiten Frequenzbereich, wobei die analoge und die digitale Verstärkungsstufe hintereinander geschaltet sind. Zweckmäßigerweise wird das mittels der analogen Verstärkungsstufe verstärkte Signal mittels eines A/D-Wandlers digitalisiert, wobei die digitale Verstärkungsstufe dem A/D-Wandler vorzugsweise direkt nachgeschaltet ist.

Vorzugsweise ist die Korrekturvorrichtung dazu ausgebildet, die frequenzabhängige Empfindlichkeit des Schwirgungssignalgebers im Wesentlichen unterhalb einer Grenzfrequenz, insbesondere unterhalb von etwa 4 Hz, zu korrigieren.

In einer ersten bevorzugten Ausführungsform sinc, die erste und die zweite Verstärkungsstufe für eine Verstärkung mit einer im Wesentlichen gleichen Frequenzabhängigkeit ausgebildet.

In einer zweiten bevorzugten Ausführungsform ist die erste Verstärkungsstufe zur Verstärkung in einem ersten Frequenzbereich und die zweite Verstärkungsstufe zur Verstärkung in einem zweiten, vom ersten unterschiedlichen Frequenzbereich ausgebildet, wobei vorzugsweise der erste Frequenzbereich bei höheren Frequenzen liegt als der zweite Frequenzbereich.

Vorzugsweise ist die digitale Verstärkungsstufe in einer digitalen Regelvorrichtung des Schwingungsisolationssystems angeordnet. In dieser Ausführungsform wird die Frequenzgangkorrektur in zwei Schritte aufgeteilt, wobei der analoge Teil noch außerhalb des digitalen Regelungssystems, der digitale Teil innerhalb des Regelungssystems, direkt nach dem A/D-Wandler zur Digitalisierung des Sensorsignals, angeordnet ist.

Ferner liegt auch ein Schwingungsisolationssystem, welches eine Korrekturvorrichtung wie oben beschrieben umfasst, im Rahmen der Erfindung.

Die Erfindung zeigt erstmals eine hybride Konzeption einer Frequenzgangkorrektur für Geophon-Sensoren auf, die dazu führt, dass das Rauschen reduziert und die Bauform für den analogen Schaltkreis verkleinert werden kann.

Die Notwendigkeit zur digitalen "Nachbearbeitung" ist für Schwingungsisolationssysteme mit digitalem Regelsystem natürlicherweise gegeben und stellt keinen zusätzlichen Aufwand dar.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

Es zeigen:
- Fig.1: eine schematische Darstellung eines Schwingungs-isolationssystems mit einer bevorzugten Ausführungsform einer Korrekturvorrichtung zum Korrigieren einer frequenzabhängigen Empfindlichkeit eines Schwingungssignalgebers des Schwingungsisolatzonssystems,
- Fig. 2: eine Empfindlichkeitskurve eines typischen bedämpften Geophons,
- Fig. 3: eine schematische Darstellung der durch analoge und digitale Verstärkung erzielte Korrektur der Empfindlichkeit eines Schwingungssignalgebers gemäß einer ersten bevorzugten Ausführungsform des erfindungsgemäßen Verfahrens,
- Fig. 4: eine schematische Darstellung der durch analoge und digitale Verstärkung erzielte Korrektur der Empfindlichkeit eines Schwingungssignalgebers gemäß einer zweiten bevorzugten Ausführungsform des erfindungsgemäßen Verfahrens, und
- Fig. 5: schematisch den durch analoge und digitale Verstärkung bereitgestellten Beitrag zur Frequenzgangkorrektur in der in Fig. 4 dargestellten Ausführungsform.

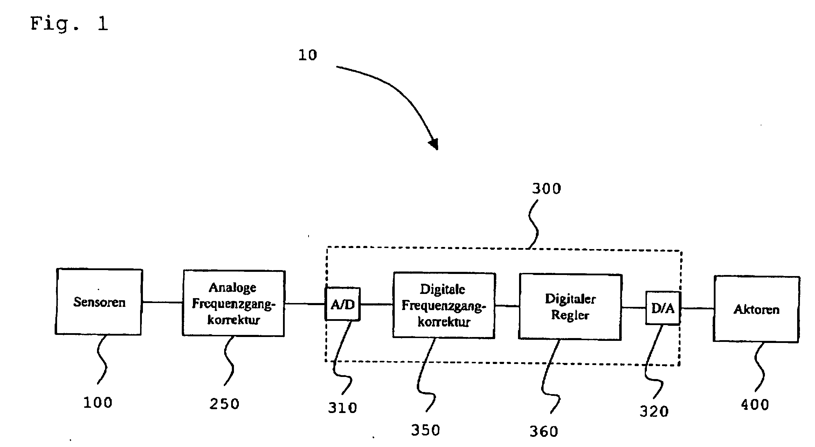

Fig. 1 zeigt eine bevorzugte Ausführungsform eir.es Schwingungsisolationssystems 10. Die in Fig. 1 stark vereinfacht dargestellte Regelungsvorrichtung für aktive Schwingungsisolationssystemanwendungen lässt sich grundsätzlich mittels an sich bekannter elektrorischer Komponenten aufbauen. In der dargestellten Ausführungsform ist wenigstens en Sensor 100 als Schwingungssigralgeber zur Lieferung analoger Sensorsignale eingangseitig mit einer Regelungsstrecke zur Verarbeitung der Sensorsignale in Aktor-Stellsignale verbunden. Die Regelungsstrecke ist ausgangsseitig mit wenigstens einem Aktor 400 verbunden, so dass die Aktoren 400 durch Zuführung der Aktor-Stellsignale zum Entgegenwirken der erfassten Schwingungen ansteuerbar sind. Typischerweise sind mehrere Sensoren 100 und mehrere Aktoren 400 vorgesehen.

Zur Regelung des Schwingungsisolationssystems 10 wird ein digitaler Regler 360 verwendet, der die zur Verarbeitung der Sensorsignale in Aktor-Stellsignale notwendigen Berechnungen auf einer digitalen Ebene durchführen. Ein hierbei für die Verarbeitung eingesetzter digitaler Prozessor umfasst üblicherweise wenigstens einen digitalen Signalprozessor, einen sogenannten DSP.

Erfindungsgemäß wird die Empfindlichkeit der Sensoren 100 im niederfrequenten Bereich, typischerweise unterhalb von 4 Hz, durch eine Frequenzgangkorrektur angehoben. Die Frequenzgangkorrektur erfolgt in zwei Schritten mittels einer analogen Verstärkungsstufe 250 und einer nachgeschalteten digitalen Verstärkungsstufe 350. Die Verstärkungsstufen 250 und 350 sind vorzugsweise dazu ausgebildet, Signale von mehreren Sensoren zu verstärken.

In der dargestellten Ausführungsform ist die digitale Verstärkungsstufe 350 zusammen mit dem digitalen Regler 360 in einer gemeinsamen Regelungsvorrichtung 300 angeordnet. Die Regelungsvorrichtung 300 umfasst ferner eingangsseitig wenigstens einen A/D-Wandler 310 zur Digitalisierung wenigstens eines analogen Ausgangssignals der Verstärkungsstufe 250, sowie wenigstens einen ausgangsseitigen D/A-Wandler 320. Die ausgangsseitigen D/A-Wandler 320 sorgen dafür, dass die berechneten digitalen Aktorsignale zu Strom-/Spannungssignalen umgewandelt werden, welche, gegebenenfalls mittels eines weiteren, nicht dargestellten Verstärkers verstärkt, den Aktoren 400 zugeführt werden.

Ein wesentlicher Vorteil der Erfindung besteht in der Zusammenführung zweier unterschiedlicher Technologien zur Frequenzgangkorrektur für Schwingungsisolationsanwendungen. Basierend auf einer hintereinander erfolgenden analogen und digitalen Frequenzgangkorrektur werden die Vorteile beider Technologien in zweckmäßiger und effektiver weise genutzt, um in der Gesamtheit eine optimale Frequenzgangkorrektur zu ermöglichen, d.h. eine lineare Sensorempfindlichkeit über einen möglichst großen Frequenzbereich, wobei insbesondere Rauschen im Signal verringert wird und die Baugröße der Vorrichtung zur analogen Frequenzgangkorrektur gegenüber einer rein analogen Schaltung reduziert wird.

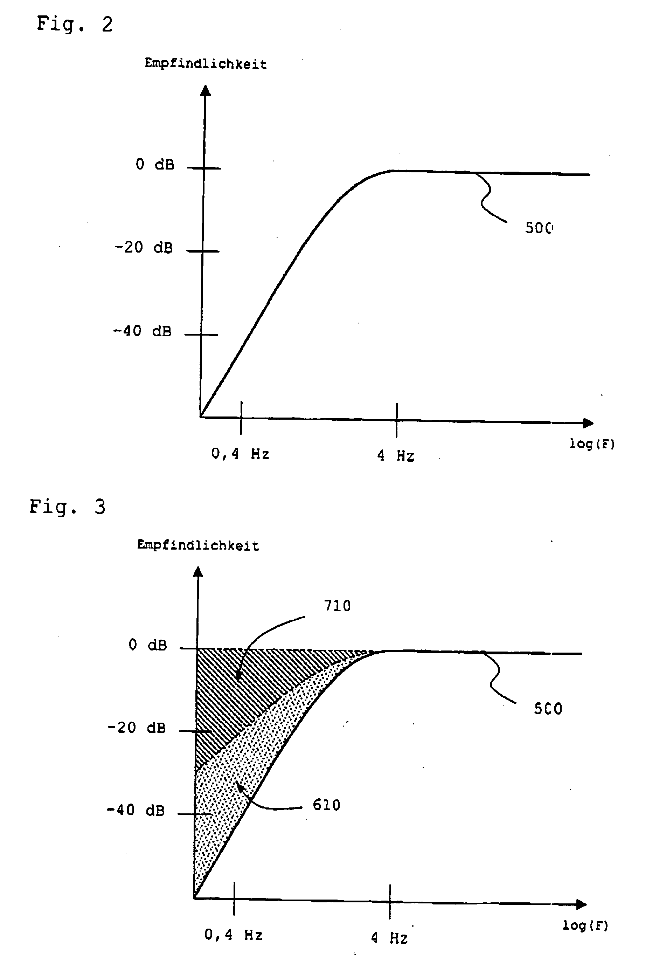

Der typische Verlauf einer Empfindlichkeitskurve 500 eines bedämpften Geophons ist in Fig. 2 dargestellt. E:; ist erkennbar, dass die Empfindlichkeit ab einer unteren Grenzfrequenz von etwa 4 Hz linear verläuft, aber zu niedrigen Frequenzen ab dieser Grenzfrequenz deutlich abfällt.

Die Korrektur dieses Empfindlichkeitsverlaufes 500 ist für zwei bevorzugte Ausführungsformen in den Figurer 3 und 4 dargestellt.

Bei der in Fig. 3 dargestellten Ausführungsform erfolgt eine analoge und eine digitale Frequenzgangkorrektur mit einer im Wesentlichen gleichen Frequenzabhängigkeit und zu im Wesentlichen gleichen Anteilen. Der von der analogen Verstärkungsstufe 250 zur Korrektur beigetragene Anteil ist mit dem Bezugszeichen 610, der von der digitalen Verstärkungsstufe 350 zur Korrektur beigetragene Anteil mit dem Bezugszeichen 620 gekennzeichnet.

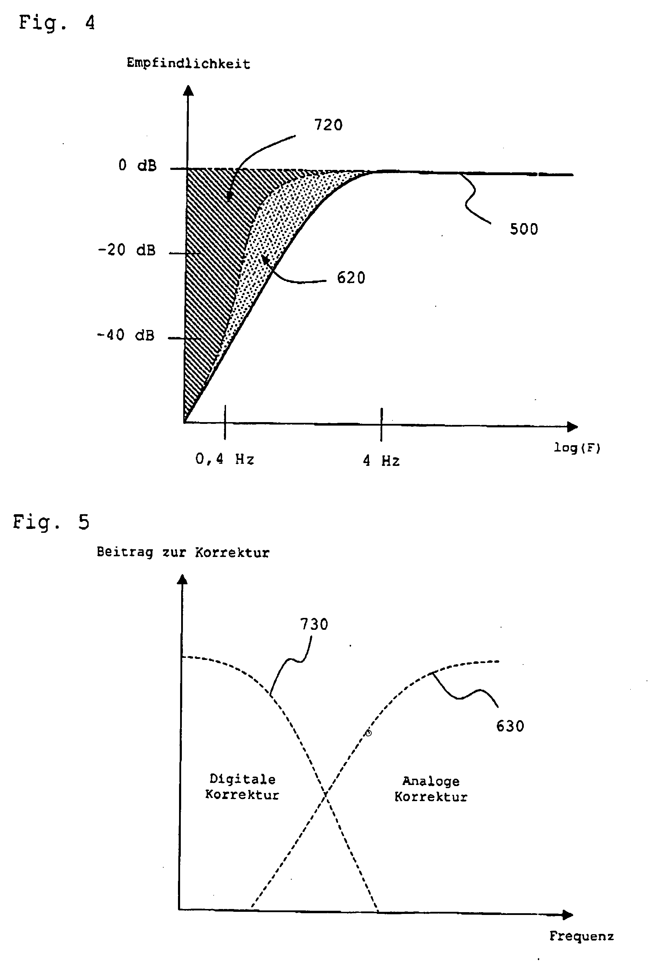

Bei der in Fig. 4 dargestellten Ausführungsform bewirkt die analoge Verstärkungsstufe 250 eine Frequenzgangkorrektur in einem ersten Frequenzbereich und die digitale Verstärkungsstufe 350 eine Frequenzgangkorrektur in einem zweiten, vom ersten unterschiedlichen Frequenzbereich. Die analoge Frequenzgangkorrektur erfolgt dabei bei höheren Frequenzen und ist durch das Bezugszeichen 620 markiert, wänrend die digitale Frequenzgangkorrektur bei niedrigeren Frequenzen erfolgt, markiert durch das Bezugszeichen 720.

In beiden Ausführungsbeispielen wird ein über einen vorgegebenen Frequenzbereich im Wesentlichen linearer Empfindlichkeitsverlauf der eingesetzten Schwingungssignalgeber durch eine Kombination von analoger und digitaler Frequenzgangkorrektur erzielt. Die in den Figuren 3 und 4 als gestrichelte Linie dargestellte, durch Korrektur zu erreichende Empfindlichkeit stellt eine Idealisierung dar, da selbstverständlich ein vollständig konstanter Verlauf, insbesondere bis zu einer beliebig niedrigen Frequenz nicht realisierbar ist. Insofern dienen die Figuren 3 und 4 nur zur Veranschaulichung der prinzipiellen Funktionsweise.

Für die zweite Ausführungsform ist in Fig. 5 beispielhaft ein Verlauf 630 des Beitrags zur Frequenzgangkorrektur durch die analoge Verstärkungsstufe 250 und ein Verlauf 730 des Beitrags durch die digitale Verstärkungsstufe 350 dargestellt. Die Verläufe in Fig. 5 zeigen nur schematisch beispielhafte Verläufe in willkürlichen Einheiten, wobei im dargestellten Beispiel die Frequenzbereiche der analogen und digitalen Frequenzgangkorrektur einen Überlappungsbereich aufweisen. An dem jeweiligen Verlauf ist erkennbar, dass in dieser Ausführungsform die analoge Verstärkungsstufe 250 einen Hochpasscharakter und die digitale Verstärkungsstufe 350 einen Tiefpasscharakter aufweist. Die Verstärkungsstufen 250 und 350 können daher vorteilhaft entsprechende Filterkomponenten umfassen.

Beide Verstärkungsvorrichtungen, die analoge 250 und die digitale 350, können vorteilhaft jeweils zur optimalen Frequenzgangkorrektur von Sensorsignalen innerhalb eines bestimmten Frequenzbereichs ausgelegt werden, wobei die dargestellten Ausführungsformen nur beispielhaft sind. Jede andere Verteilung der Frequenzgangkorrektur auf die analoge und die digitale Verstärkungsvorrichtung liegt ebenso im Rahmen der Erfindung.

Bei einer beispielhaften praktischen Umsetzung sind die Schwingungssignalgeber oder Sensoren 100 in bestimmter, für den Anwendungszweck angepasster Weise um eine zu isolierende Masse angeordnet, zweckmäßiger Weise auch hinsichtlich ihrer Richtungsempfindlichkeit. Die Aktoren 400 sind ebenfalls in geeigneter Weise zu der Masse angeordnet, um diese zu stützen und die Schwingurg der Masse gegenüber der Umgebung zu isolieren oder solchen Schwingungen entgegenzuwirken. Ferner sind bei Schwingungsisolationssystemen im Allgemeinen sechs Freiheitsgrade zu beachten, wobei mittels der Anzahl von Sensoren die Schwingungen innerhalb der sechs Freiheitsgraden aufgenommen werden. Üblicherweise sind die gelieferten Sensorsignale miteinander gekoppelt, so dass die Regelungseinrichtungen die Sensorsignale zunächst in entkoppelte Achsensignale verarbeiten, die anschließend noch weiter verarbeitet werden, um Stellsignale am Aktor zu erzeugen. Sind z.B. acht Aktoren vorgesehen, werden je Regelungseinrichtung entsprechend auch acht Aktor-Stellsignale berechnet.

## Patentansprüche

1. Verfahren zur Regelung eines Schwingungsisolationssystems (10), umfassend die Schritte
- Erzeugen wenigstens eines analogen, Schwingungen repräsentierenden Sensorsignals mittels wenigstens eines Schwingungssignalgebers (100),
- frequenzabhängiges Verstärken des Sensorsignals zum Korrigieren einer frequenzabhängigen Empfindlichkeit des Schwingungssignalgebers (100), umfassend eine erste Verstärkung mittels einer analogen Verstärkungsstufe (250) und eine zweite Verstärkung mittels einer digitalen Verstärkungsstufe (350), wobei die analoge Verstärkungsstufe (250) und die digitale Verstärkungsstufe (350) hintereinander geschaltet sind,
- Erzeugen wenigstens eines Aktor-Stellsignals durch Verarbeiten des verstärkten Sensorsignals, und
- Ansteuern wenigstens eines Aktors (400) mit dem Aktor-Stellsignal zum Entgegenwirken der Schwingungen.

2. Verfahren nach Anspruch 1, wobei das Sensorsignal im wesentlichen nur unterhalb einer Grenzfrequenz des Schwingungssignalgebers (100) verstärkt wird.

3. Verfahren nach Anspruch 2, wobei die Grenzfrequenz bei etwa 4 Hz liegt.

4. Verfahren nach einem der Ansprüche 1 bis 3, wobei die erste und zweite Verstärkung mit einer im Wesentlichen gleichen Frequenzabhängigkeit erfolgt.

5. Verfahren nach einem der Ansprüche 1 bis 3, wobei das Sensorsignal durch die erste Verstärkung in einem ersten Frequenzbereich und durch die zweite Verstärkung in einem zweiten, vom ersten unterschiedlichen Frequenzbereich verstärkt wird.

6. Verfahren nach Anspruch 5, wobei der erste frequenzbereich bei höheren Frequenzen liegt als der zweite Frequenzbereich.

7. Verfahren nach einem der vorstehenden Ansprüche, wobei die digitale Verstärkungsstufe (350) der analogen Verstärkungsstufe (250) nachgeschaltet ist.

8. Korrekturvorrichtung (250, 350) zum Korrigieren einer frequenzabhängigen Empfindlichkeit eines Schwingungssignalgebers (100) eines Schwingungsisolationssystems (10), umfassend
- eine analoge Verstärkungsstufe (250), ausgebildet zur frequenzabhängigen Verstärkung eines von dem Schwingungssignalgeber (100) erzeugten Sensorsignals in einem ersten Frequenzbereich, und
- eine digitale Verstärkungsstufe (350), ausgebildet zur frequenzabhängigen Verstärkung des digitalisierten Signals in einem zweiten Frequenzbereich, wobei die analoge Verstärkungsstufe (250) und die digitale Verstärkungsstufe (350) hintereinander geschaltet sind.

9. Korrekturvorrichtung nach Anspruch 8, dazu ausgebildet die frequenzabhängige Empfindlichkeit des Schwingungssignalgebers (100) im Wesentlichen unterhalb einer Grenzfrequenz des Schwingungssignalgebers (100) zu korrigieren.

10. Korrekturvorrichtung nach Anspruch 9, wobei die Grenzfrequenz bei etwa 4 Hz liegt.

11. Korrekturvorrichtung nach einem der Ansprüche 8 bis 10, wobei die analoge (250) und die digitale (350) Verstärkungsstufe für eine Verstärkung mit einer im Wesentlichen gleichen Frequenzabhängigkeit ausgebildet sind.

12. Korrekturvorrichtung nach einem der Ansprüche 8 bis 11, wobei die analoge Verstärkungsstufe (250) zur Verstärkung in einem ersten Frequenzbereich und die digitale Verstärkungsstufe (350) zur Verstärkung in einem zweiten, vom ersten unterschiedlichen Frequenzbereich ausgebildet ist.

13. Korrekturvorrichtung nach Anspruch 12, wobei der erste Frequenzbereich bei höheren Frequenzen liegt als der zweite Frequenzbereich.

14. Korrekturvorrichtung nach einem der vorstehenden Ansprüche, wobei die digitale Verstärkungsstufe (350) der analogen Verstärkungsstufe (250) nachgeschaltet ist.

15. Korrekturvorrichtung nach einem der vorstehenden Ansprüche, wobei die digitale Verstärkungsstufe (350) in einer digitalen Regelvorrichtung (300) des Schwingungsisolationssystems (10) angeordnet ist.

16. Schwingungsisolationssystem (10), umfassend eine Korrekturvorrichtung (250, 350) nach einem der Ansprüche 8 bis 14.

## Claims

1. Method for regulating a vibration isolation system (10) including the steps of:
- producing at least one analogue sensor signal representing vibrations by means of at least one vibration signal transmitter (100),
- amplifying the sensor signal in a frequency-dependent manner in order to correct a frequency-dependent sensitivity of the vibration signal transmitter (100), including a first amplification by means of an analogue amplification stage (250) and a second amplification by means of a digital amplification stage (350), wherein the analogue amplification stage (250) and the digital amplification stage (350) are connected one behind the other,
- producing at least one actuator control signal by processing the amplified sensor signal, and
- controlling at least one actuator (400) by means of the actuator control signal in order to counteract the vibrations.

2. Method as claimed in Claim 1, wherein the sensor signal is essentially amplified only below a limit frequency of the vibration signal transmitter (100).

3. Method as claimed in Claim 2, wherein the limit frequency is approximately 4 Hz.

4. Method as claimed in any one of Claims 1 to 3, wherein the first amplification and the second amplification take place having a substantially identical frequency-dependency.

5. Method as claimed in any one of Claims 1 to 3, wherein the sensor signal is amplified by the first amplification in a first frequency range and by the second amplification in a second frequency range which is different from the first frequency range.

6. Method as claimed in Claim 5, wherein the first frequency range is of higher frequencies than the second frequency range.

7. Method as claimed in any one of the preceding Claims, wherein the digital amplification stage (350) is connected downstream of the analogue amplification stage (250).

8. Correction device (250, 350) for correcting a frequency-dependent sensitivity of a vibration signal transmitter (100) of a vibration isolation system (10) including:
- an analogue amplification stage (250) formed to amplify, in a frequency-dependent manner, a sensor signal, produced by the vibration signal transmitter (100), in a first frequency range, and
- a digital amplification stage (350) formed to amplify, in a frequency-dependent manner, the digitised signal in a second frequency range, wherein the analogue amplification stage (250) and the digital amplification stage (350) are connected one behind the other.

9. Correction device as claimed in Claim 8, formed in order to correct the frequency-dependent sensitivity of the vibration signal transmitter (100) essentially below a limit frequency of the vibration signal transmitter (100).

10. Correction device as claimed in Claim 9, wherein the limit frequency is approximately 4 Hz.

11. Correction device as claimed in any one of Claims 8 to 10, wherein the analogue amplification stage (250) and the digital amplification stage (350) are formed for amplification having a substantially identical frequency-dependency.

12. Correction device as claimed in any one of Claims 8 to 11, wherein the analogue amplification stage (250) is formed for amplification in a first frequency range and the digital amplification stage (350) is formed for amplification in a second frequency range which is different from the first frequency range.

13. Correction device as claimed in Claim 12, wherein the first frequency range is of higher frequencies than the second frequency range.

14. Correction device as claimed in any one of the preceding Claims, wherein the digital amplification stage (350) is connected downstream of the analogue amplification stage (250).

15. Correction device as claimed in any one of the preceding Claims, wherein the digital amplification stage (350) is disposed in a digital regulating device (300) of the vibration isolation system (10).

16. Vibration isolation system (10) including a correction device (250, 350) as claimed in any one of Claims 8 to 14.

## Revendications

1. Procédé pour le réglage d'un système d'isolation de vibration (10), comprenant les étapes suivantes
- génération d'au moins un signal de capteur analogique, représentant des vibrations au moyen d'au moins un générateur de signaux de vibration (100),
- amplification, dépendante de la fréquence, du signal de capteur pour corriger une sensibilité, dépendante de la fréquence, du générateur de signaux de vibration (100), comprenant une première amplification au moyen d'un niveau d'amplification (250) analogique et une seconde amplification au moyen d'un niveau d'amplification (350) numérique, le niveau d'amplification (250) analogique et le niveau d'amplification (350) numérique étant montés l'un derrière l'autre
- génération d'au moins un signal de commande d'actionneur par traitement du signal de capteur amplifié, et
- activation d'au moins un actionneur (400) avec le signal de commande d'actionneur pour s'opposer aux vibrations.

2. Procédé selon la revendication 1, le signal de capteur étant amplifié pratiquement uniquement au-dessous d'une fréquence limite du générateur de signaux de vibration (100).

3. Procédé selon la revendication 2, la fréquence limite se situant aux environs de 4 Hz.

4. Procédé selon l'une quelconque des revendications 1 à 3, la première et la seconde amplification s'effectuant avec une dépendance de la fréquence sensiblement identique.

5. Procédé selon l'une quelconque des revendications 1 à 3, le signal de capteur étant amplifié par la première amplification dans une première plage de fréquences et par la seconde amplification dans une seconde plage de fréquences différente de la première.

6. Procédé selon la revendication 5, la première plage de fréquences se situant à des fréquences plus élevées que la seconde plage de fréquences.

7. Procédé selon l'une quelconque des revendications précédentes, le niveau d'amplification (350) numérique étant monté en aval du niveau d'amplification (250) analogique.

8. Dispositif de correction (250, 350) destiné à corriger une sensibilité, dépendante de la fréquence d'un générateur de signaux de vibration (100), d'un système d'isolation de vibration (10) comprenant
- un niveau d'amplification (250) analogique, conçu pour l'amplification, dépendante de la fréquence, d'un signal de capteur généré par le générateur de signaux de vibration (100) dans une première plage de fréquences, et
- un niveau d'amplification (350) numérique, conçu pour l'amplification, dépendante de la fréquence, du signal numérisé dans une seconde plage de fréquences, le niveau d'amplification (250) analogique et le niveau d'amplification (350) numérique étant montés l'un derrière l'autre.

9. Dispositif de correction selon la revendication 8, conçu pour corriger la sensibilité, dépendante de la fréquence, du générateur de signaux de vibration (100) pratiquement au-dessous d'une fréquence limite du générateur de signaux de vibration (100).

10. Dispositif de correction selon la revendication 9, la fréquence limite se situant aux environs de 4 Hz.

11. Dispositif de correction selon l'une quelconque des revendications 8 à 10, le niveau d'amplification analogique (250) et le niveau d'amplification numérique (350) étant conçus pour une amplification avec une dépendance de la fréquence sensiblement identique.

12. Dispositif de correction selon l'une quelconque des revendications 8 à 11, le niveau d'amplification (250) analogique et le niveau d'amplification (350) numérique étant conçus respectivement pour l'amplification dans une première plage de fréquences et pour l'amplification dans une seconde plage de fréquences différente de la première.

13. Dispositif de correction selon la revendication 12, la première plage de fréquences étant située à des fréquences plus élevées que la seconde plage de fréquences.

14. Dispositif de correction selon l'une quelconque des revendications précédentes, le niveau d'amplification (350) numérique étant monté en aval du niveau d'amplification (250) analogique.

15. Dispositif de correction selon l'une quelconque des revendications précédentes, le niveau d'amplification (350) numérique étant disposé dans un dispositif de réglage (300) numérique du système d'isolation de vibration (10).

16. Système d'isolation de vibration (10) comprenant un dispositif de correction (250, 350) selon l'une quelconque des revendications 8 à 14.
